(19) Europäisches Patentamt
European Patent Office
Office européen des brevets

(11) **EP 3 305 434 B1**

(12) **EUROPÄISCHE PATENTSCHRIFT**

(45) Veröffentlichungstag und Bekanntmachung des Hinweises auf die Patenterteilung:
**10.04.2019   Patentblatt 2019/15**

(21) Anmeldenummer: **17001736.2**

(22) Anmeldetag: **21.01.2016**

(51) Int Cl.:
**B21H 1/20** (2006.01)      **B21D 15/02** (2006.01)
**B21D 53/28** (2006.01)      **B21H 5/02** (2006.01)
**B21H 7/18** (2006.01)

(54) **KASSETTE GEEIGNET ZUR AUFNAHME EINES PROFILROLLENSATZES ODER DRÜCKUMFORMSATZES ZUM UMFORMEN VON LAMELLENTRÄGERN ODER DERGLEICHEN UND ENTSPRECHENDES UMFORMWERKZEUG**

CASSETTE ADAPTED TO RECEIVE A PROFILE ROLE SET OR PRESSURE FORMING SET TO ADJUST THE SHAPE OF A LAMELLAE CARRIER OR THE LIKE AND CORRESPONDING DEFORMATION TOOL

CASSETTE CONÇUE POUR RECEVOIR UN ENSEMBLE DE ROULEAUX PROFILÉS OU UN ENSEMBLE DE PIÈCES FORMÉES PAR COMPRESSION DESTINÉS À LA FORMATION DE SUPPORTS DE LAMELLES OU ANALOGUES ET OUTIL DE FORMATION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2015   DE 102015009733**

(43) Veröffentlichungstag der Anmeldung:
**11.04.2018   Patentblatt 2018/15**

(62) Dokumentnummer(n) der früheren Anmeldung(en) nach Art. 76 EPÜ:
**16000140.0 / 3 124 132**

(73) Patentinhaber:
• **WEBO Werkzeugbau Oberschwaben GmbH 88279 Amtzell (DE)**
• **Transform Automotive LLC, Inc. Sterling Heights MI 488312 (US)**

(72) Erfinder:
• **ZIESEL, Norbert 88279 Amtzell (DE)**
• **MEIER, Thomas Rochester Hills, Michigan 48307 (US)**

(74) Vertreter: **Riebling, Holger Patentanwaltskanzlei Dr. Peter Riebling Rennerle 10 88131 Lindau (DE)**

(56) Entgegenhaltungen:
DE-A1- 19 531 907          DE-A1-102006 025 034
DE-A1-102013 006 216    DE-A1-102013 221 391
DE-B3-102008 017 608

**Beschreibung**

Die Erfindung betrifft eine Kassette geeignet zur Aufnahme eines Profilrollensatzes oder Drückumformsatzes zum Umformen von Lamellenträgern oder dergleichen nach dem Oberbegriff des Patentanspruches 1, und ein Umformwerkzeug mit einer Vielzahl solcher Kassetten.

Ein Profilrollensatz mit einem Rollwerkzeug ist beispielsweise mit dem Gegenstand der auf den gleichen Anmelder zurückgehenden DE 10 2010 053 547 A1 bekannt geworden.

Ein gleicher Gegenstand ergibt sich im Übrigen aus der gleichfalls auf den gleichen Anmelder zurückgehenden DE 10 2013 006 216 A1.

Ein mit einem Rollwerkzeug nach der DE 10 2013 006 216 A1 oder der DE 10 2010 053 547 A1 hergestellter Gegenstand (Bauteil) ist beispielsweise in der DE 10 2013 006 150 A1 beschrieben. Dort ist im Einzelnen auch die Rollumformung beschrieben.

Ein Profilrollensatz ist demnach aus einer oder mehreren der oben genannten Druckschriften zu entnehmen.

Kennzeichnend für einen solchen Profilrollensatz ist, dass am Umfang eines Rollwerkzeuges eine Mehrzahl von Kassetten gleichmäßig verteilt angeordnet sind, in deren Innenraum Profilrollen angeordnet sind, die sich mit ihrem Außenumfang am Außenumfang eines umzuformenden Bauteils abwälzen und demzufolge eine Verzahnung am umzuformenden Bauteil einbringen.

Bei der Herstellung solcher rotationssymmetrischer Bauteile geht es zum Beispiel um die Herstellung eines Lamellenträgers für eine Doppelkupplungsanordnung, wie sie in der DE 10 2013 216 747 A1 beschrieben ist.

Nachteil eines solchen Lamellenträgers ist jedoch, dass seine Verzahnungsgeometrie in der Art eines Wellblechs ausgebildet ist, das heißt, es handelt sich um im Radius kleine Verzahnungen, die jedoch über den Außenumfang wellenartig gleichmäßig verteilt angeordnet sind, sodass sich ein Profil ergibt, wie es beispielsweise in der DE 10 2013 216 747 A1 beschrieben ist.

Die Anwendung eines solchen Lamellenträgers für eine Doppelkupplung ist beispielsweise Gegenstand der DE 10 2014 211 633 A1 oder der DE 10 2012 213 119 B3.

Nachteil der Lamellenträger nach dem Stand der Technik ist jedoch deren geringe Drehzahlfestigkeit. Dies bedeutet, dass sich das Teil bei hohen Drehzahlen streckt und die wellenförmigen Verformungen dazu neigen, sich in Richtung der Fliehkraftwirkung auszugleichen, dabei kann zu einer Beschädigung des Lamellenträgers kommen.

Die beschriebenen Lamellenträger haben deshalb nur eine geringe Drehzahlfestigkeit. Solche Lamellenträger können mit maximalen Drehzahlen im Bereich zwischen zum Beispiel 10.000 bis 14.000 Umdrehungen pro Minute betrieben werden. Hier liegt die im Stand der Technik gegebene Drehzahlbegrenzung der bekannten Lamellenträger. Der angegebene Bereich ist lediglich eine bevorzugte Ausgestaltung. Es können auch höhere Drehzahlbereiche erreicht werden.

Lamellenträger, die so ausgebildet sind, dass zwischen dem Innendurchmesser und dem Außendurchmesser der Verzahnung ein schmaler, umlaufender, in sich geschlossener unverformter Steg verbleibt, sind in vielfältigen Ausführungsformen bekannt geworden. Der Steg ist in der Verzahnung als integrierter Stützband-Zylinder angeordnet und soll die Drehzahlfestigkeit des Lamellenträgers erhöhen.

Allerdings arbeitet der Stand der Technik mit völlig anderen Herstellungsverfahren, die als nachteilig angesehen werden.

Der unverformte Steg bei Lamellenträgern hat die Aufgabe eine axiale Steifigkeit des Lamellenträgers zu erreichen, um ein Auftulpen bei hohen Drehzahlen zu reduzieren.

Die Herstellung derartiger Lamellenträger mit dem sogenannten Hoopband wird bisher durch Extrusion des Bauteils in einer Extruderform hergestellt. Es handelt sich dabei um ein Kaltumformverfahren, welches das aus einem verformbaren Blechteil bestehende Bauteil durch Durchpressen durch eine Extruderform verwirklicht. Hierzu muss das Bauteil gebondert werden, das heißt geseift werden und dies erfordert einen zusätzlichen Herstellungsprozess. Des Weiteren sind die gewünschten Genauigkeiten durch das angewendete, bekannte Extrudierverfahren im Vergleich zu einer Anordnung nach der vorliegenden Erfindung nicht herstellbar.

Wegen der Anisotropie des verwendeten Blechmaterials kommt es stets zu Asymmetrien der Verformung während des Extrudiervorganges, was zu unerwünschten und nicht beeinflussbaren Verformungen führt, welche die Genauigkeit des Lamellenträgers beeinträchtigen. Die durch die Anisotropie des Materials bedingten Ungenauigkeiten entstehen nicht während des Extrudiervorganges an sich, sondern erst nach dem Ausformen des umgeformten Werkstücks, welches in unerwünschter Weise federnd zurückspringt und dadurch die Ungenauigkeiten entstehen.

Ferner ist ein Verfahren zur Herstellung der gegenständlichen Lamellenträger durch Drückwalzen bekannt geworden, was einen sehr langsamen Herstellungsprozess bedeutet, der durch die Technologie des verwendeten Verfahrens bedingt ist.

Bei diesem Verfahren wird ein Vorformling über einen zentralen, profilierten Dorn geschoben und ein oder mehrere Profilrollen umkreisen den auf den Dorn aufgeschobenen Vorformling und formen aufgrund des Rollendruckes den Rohling in die zentrale Urform hinein.

Es gibt auch ein Einzelnut-Rollverfahren, welches dergestalt abläuft, dass die einzelnen Nuten des Werkstücks mit einem einzigen Werkzeug nacheinander folgend ausgewalzt werden, was mit einer langen Herstellungsdauer und ebenfalls in Kauf zu nehmenden Ungenauigkeiten verbunden ist.

Weiter bekannt ist ein Verfahren als Flachbacken Walzverfahren, welches dergestalt abläuft, dass die Nuten des Werkstückes mit zwei gegenüberliegenden vertikal angeordneten Verzahnungsplatten in einer Längsbewegung eingeformt werden. Dies ist mit einer langen Herstelldauer und ebenfalls in Kauf zu nehmenden Ungenauigkeiten verbunden.

Darüber hinaus gibt es noch das Schlagstempelverfahren, bei dem mit Hilfe von Umformrollen, die in der Art von Hämmern auf das Werkstück schlagen, eine Umformung erreicht wird.

Das Verfahren kann nur mit einer geringen Produktionsleistung verwirklicht werden.

Die DE 10 2008 017 608 B3, welche die Basis für den Oberbegriff des Anspruchs 1 bildet, offenbart eine Vorrichtung zur Herstellung von Lamellenträgern, welche Kassetten zur Aufnahme von Profilrollensätzen umfasst. Die Kassette ist keilförmig ausgebildet und kann mittels eines Verstellkeils im Rollwerkzeug in radialer Richtung eingestellt werden.

Die DE 10 2006 007501 A1 offenbart ein Rollwerkzeug zum Rollen von Lamellenträgern oder dergleichen, die als innen- und außenverzahntes, topfförmiges Blechteil ausgebildet sind, wobei am Umfang eines Rollwerkzeuges eine Mehrzahl von Kassetten gleichmäßig verteilt angeordnet sind, in deren Innenraum Profilrollen angeordnet sind, die sich mit ihrem Außenumfang am umzuformenden Lamellenträger abwälzen und dergestalt eine Verzahnung am umzuformenden Lamellenträger einbringen, wobei ein Gegenhalter im Innenraum des Lamellenträgers angeordnet ist, in dessen Profil das Profil des Lamellenträgers hinein verformt wird.

Die DE 10 2006 025034 A1 offenbart ein ähnliches Werkzeug zum Drückumformen von Lamellenträgern, bei dem anstelle von Profilrollen ein Drückwerkzeug mit Profilelementen verwendet wird.

Der Erfindung liegt die Aufgabe zugrunde, eine Kassette geeignet zur Aufnahme eines Profilrollensatzes oder Drückumformsatzes zum Umformen von Lamellenträgern nach dem Oberbegriff des Patentanspruchs 1 so weiterzubilden, dass sie eine vereinfachte Einstellmöglichkeit der Position der Kassette bietet, so dass die daraus hergestellten Lamellenträger eine verbesserte Dimensionsgenauigkeit und eine höhere Drehzahlfestigkeit aufweisen.

Zur Lösung der gestellten Aufgabe ist die Erfindung durch die technische Lehre des Anspruches 1 gekennzeichnet.

Mit dem in der Kassette aufgenommenen Profilrollensatz bzw. Drückumformsatz und der auswechselbaren Einstellplatte ist es erstmals möglich, derartige Lamellenträger im Umformverfahren bei einfacher Einstellbarkeit der Verformungstiefe herzustellen.

Damit wird eine hohe Produktionsleistung erzielt und durch die verwendeten Profilrollen eine höhere Bauteilgenauigkeit. Darüber hinaus ist bei der Erfindung der weitere Vorteil gegeben, dass durch die Art der Verstellbarkeit des Profilrollensatzes eine noch verbesserte Genauigkeit erzielt werden kann.

Alternativ zu dem Rollverfahren mit einem Profilrollensatz kann in der gleichen Weise auch ein Drückumformsatz verwendet werden. Die vorher beschriebene Anisotropie des verwendeten Blechmaterials spielt nur noch eine geringe Rolle. Der verwendete Profilrollensatz oder alternativ der Druckumformsatz kann jede einzelne Nutposition des Werkstücks, die über den Außenumfang gleichmäßig verteilt angeordnet ist, bezüglich der Umformtiefe und der Formgebung unterschiedlich behandeln und wirkt damit einer durch die Anisotropie hervor gerufenen Unrundheit entgegen. Jedem Nutenzahn wird ein eigener Profilrollensatz zugeordnet, sodass die Umformgeometrie und die Umformtiefe für jeden Nutenzahn unterschiedlich gewählt werden kann.

Bei der Verwendung von Profilrollensätzen und alternativ von Drückumformsätzen ergibt sich nun der Vorteil einer wesentlich höheren Produktionsleistung, weil in einem Bereich von 10-30 Hüben pro Minute jeweils ein Teil hergestellt werden kann, was dem Stand der Technik bisher nicht bekannt war.

Zwar hat das vorher angegebene Extrudierverfahren ebenfalls eine relativ hohe Produktionsleistung, hat aber den Nachteil eines hohen Verschleißes des Extrudierwerkzeuges und der unerwünschten Verformungen aufgrund der Anisotropie des Materials, was bei der Erfindung vermieden wird.

Damit liegt der Erfindung die Erkenntnis zugrunde, dass man die Zahngeometrie so gestalten muss, dass zwischen dem Innendurchmesser und dem Außendurchmesser der Verzahnung ein schmaler, umlaufender, in sich geschlossener Stegbereich verbleibt, der auch als Stützband-Zylinder bezeichnet wird und der in bekannter Weise die Drehzahlfestigkeit erhöht.

Weil dieser Stützband-Zylinder stetig umläuft, in sich geschlossen ist und keinerlei Ausbuchtungen oder sonstige Versätze aufweist, wird dadurch eine entscheidende Erhöhung der Drehzahlfestigkeit der Verzahnung erreicht.

Ein mit dem Profilrollensatz hergestelltes Bauteil zeichnet sich dadurch aus, dass zwischen dem Innendurchmesser und dem Außendurchmesser der Verzahnung ein schmaler, umlaufender, in sich geschlossener Stegbereich verbleibt, der auch als Stützband-Zylinder bezeichnet wird und der in bekannter Weise die Drehzahlfestigkeit erhöht.

Demgemäß wird die Verformungstiefe der Profilrollen am umzuformenden Lamellenträger so ausgebildet, dass zwischen dem Innendurchmesser und dem Außendurchmesser der Verzahnung ein schmaler, umlaufender, in sich geschlossener, unverformter Steg verbleibt, der als Stützband-Zylinder die Drehzahlfestigkeit erhöht.

Durch die Ausführung der Verzahnungsparameter bezüglich Kopf- und Fußdurchmesser mit dem definierten Verhältnis

$$Y < X$$

bei Innenlamellenträgern und Außenlamellenträgern ist die Festigkeit eines verzahnten topfförmigen Bauteiles durch diese Definition deutlich höher als die bekannten Lamellenträger.

Hierbei bedeutet der Parameter Y, bezogen auf einen Außenlamellenträger, den Zahnkopf-Durchmesser Y eines radial innen liegenden Zahnkopfes, während gegenüberliegend der Parameter X den Zahn-Durchmesser X eines radial außen liegenden Zahnes bedeutet.

Erfindungsgemäß soll der Wert X stets größer als Y sein, was bedeutet, dass sich zwischen den beiden Durchmesserbereichen von dem größeren Durchmesser X und dem kleineren Durchmesser Y ein unverformter Stegbereich im Bereich der umlaufenden Verzahnung ergibt, der in unerwarteter Weise nunmehr ein die Drehzahlfestigkeit steigerndes Band ergibt, welches nachfolgend als Stützband bezeichnet wird.

Die erreichte Verbesserung wird insbesondere bei der Belastung im Getriebe von Lamellenträgern im Speziellen bei hohen Drehzahlen und Drehmomenten benötigt.

Wird diese Auslegung berücksichtigt, entsteht gedanklich ein nicht verformter Bereich im Verzahnungsprofil. Man spricht von einem Drehzahlband / Hoob Banding. Die gedankliche Bildung von jeweils einem Kreis des kleineren Y-Wertes und des größeren X-Wertes ergibt einen Zylinder, nämlich den sogenannten Stützband-Zylinder.

Bei Belastung ist ein solcher Stützband-Zylinder deutlich fester als ein Lamellenträger, der dieses Verhältnis nicht berücksichtigt und deshalb wurde beim Stand der Technik eine umlaufende Seele in der Art eines Stützbandzylinders nicht erreicht.

Durch den Einsatz einer speziell hierfür vorgesehenen Vorrichtung ist es möglich, dieses Stützband umformtechnisch mit einer Rolle und/oder einem Drückwerkzeug herzustellen.

Somit kann auf das Bonden der Platinen verzichtet werden. Die so erreichte Standzeit eines Rollwerkzeuges ist um ein Vielfaches höher als die herkömmliche Technik.

In einer bevorzugten Ausgestaltung der vorliegenden Erfindung liegt die Stützband-Dicke (Stärke) im Bereich von mindestens 0,5mm, kann aber bis zu 2 bis 3 mm, bezogen auf einen Außendurchmesser der Verzahnung von etwa 300 bis 400 mm, gehen.

Es hat sich herausgestellt, dass schon bereits geringe Stützbanddicken eines unverformten Stegbereiches ausreichen, die Drehzahlfestigkeit eines so hergestellten Lamellenträgers entscheidend zu verbessern.

Die Stärke eines solchen Außenlamellenträgers beträgt dann nur noch (im Bereich der Kopfwandstärke) etwa 1 bis 3mm, wobei der später als Steg oder Stützband-Zylinder bezeichnete Bereich der Verzahnung gemeint ist.

Bezogen auf einen Stand der Technik, der einen ähnlich breiten Stegbereich jedoch ohne Stützbandzylinder aufweist, unterscheidet sich ein solcher Außenlamellenträger darin, dass die Drehzahlfestigkeit von zum Beispiel 10.000 Umdrehungen pro Minute nach dem Stand der Technik, auf 14.000 Umdrehungen pro Minute oder mehr erhöht werden kann. Dies war nicht erwartbar.

Der Vorteil liegt demnach darin, dass unverformte mittlere Bereiche im Bereich der Verzahnung des Bauteils angeordnet sind, und diese unverformten mittleren Bereiche werden als Stützband-Zylinder bezeichnet, der sich bevorzugt annähernd über die gesamte axiale Länge des Außenlamellenträgers oder des Innenlamellenträgers erstreckt, und die Drehzahlfestigkeit in entscheidender Weise verbessert.

Dass dies nicht naheliegend war, ergibt sich beispielsweise aus dem Gegenstand der DE 10 2013 216 747 A1, bei der eine Erhöhung der Drehzahlfestigkeit dadurch versucht wurde, dass ein Innenlamellenträger mit seiner regelmäßigen Verzahnung mit einem Außenlamellenträger ineinandergesteckt ist, und sich eine unerwünscht große Wandstärke ergibt, wobei die beiden ineinandergesteckten Profilzylinder sich gegenseitig abstützen, um so die Drehzahlfestigkeit zu verbessern.

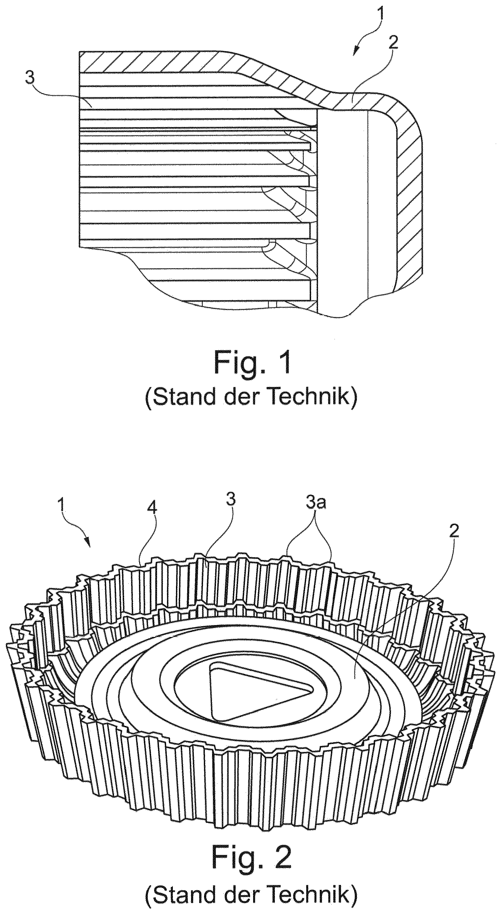

Nachteil ist jedoch das sogenannte Wellblechprofil, das in Figur 2 der vorliegenden Erfindung als Stand der Technik beschrieben und gezeichnet ist, was bedeutet, dass es nicht möglich ist, einen radialen, durchgehenden, in sich geschlossenen Umfangskreis durch die Verzahnung hindurch zu zeichnen, der unverformt ist. Aus diesem Grund zeigt der Stand der Technik gerade nicht einen Stützband-Zylinder, wie er bei der vorliegenden Erfindung angestrebt wird.

Im Folgenden wird die Erfindung anhand von lediglich einen Ausführungsweg darstellenden Zeichnungen näher erläutert.

Es zeigen:

Figur 1: einen Teilschnitt durch einen Lamellenträger nach dem Stand der Technik

Figur 2: einen Lamellenträger nach dem Stand der Technik gemäß der DE 10 2013 216 747 A1

Figur 3: einen Lamellenträger in der Art eines Außenlamellenträgers in Stirnansicht

Figur 4: einen vergrößerten Teilschnitt durch den Außenlamellenträger nach Figur 3 entsprechend dem Detail X

Figur 5: die Stirnansicht des Stützband-Zylinders, der in der Verzahnung nach Figur 4 integriert ist

Figur 6: die Draufsicht auf einen Innenlamellenträger

Figur 7: die vergrößerte Schnittdarstellung eines Details X aus Figur 6

Figur 8: eine Verzahnung nach dem Stand der Technik

Figur 9: die Verzahnung bei einem Außenlamellenträger

Figur 10: die Verzahnung bei einem Innenlamellenträger

Figur 11: die schematisierte Darstellung eines Rollensatzes zur Herstellung eines Außenlamellenträgers

Figur 12: eine vergrößerte Darstellung des Rollensatzes nach Figur 11

Figur 13: einen Rollensatz zur Herstellung einer Verzahnung an einem Außenlamellenträger

Figur 14: ein Detail vergrößert nach der Darstellung in Figur 13

Figur 15: einen weiteren Rollensatz für die Herstellung eines Außenlamellenträgers

Figur 16: die vergrößerte Darstellung des Rollensatzes nach Figur 15

Figur 17: die perspektivische Darstellung einer erfindungsgemäßen Kassette mit einer darin angeordneten, drehbar gelagerten Profilrolle

Figur 18: die Seitenansicht der Figur 17

Figur 19: eine alternative Werkzeugform im Vergleich zu Figuren 17 und 18, die ein Drückwerkzeug zeigt, welches perspektivisch dargestellt ist

Figur 20: schematisiert den Innenaufbau des Drückwerkzeuges nach Figur 19

Figur 21: perspektivische Ansicht eines Rollwerkzeugs nach der Ausführung gemäß Fig. 17 bis 18 oder in der Ausführung nach Fig. 19-20.

Figur 1 zeigt einen Lamellenträger 1 nach dem Stand der Technik, der im Wesentlichen aus dem Deckel 2 besteht, in dessen Innenraum eine Verzahnung 3 angeordnet ist.

Figur 1 zeigt einen Teilschnitt eines vollständigen Lamellenträgers nach Figur 2, der zum Stand der Technik gehört. Dort ist erkennbar, dass eine unerwünscht starke Wandung 4 eines Lamellenträgers 1 vorhanden ist, die aus einem Doppel-Wellblech-Profil besteht, nämlich aus der inneren Verzahnung 3, der eine größere wellenartige Verzahnung 3a überlagert ist, sodass sich das in der Beschreibungsanleitung erwähnte modulierte Wellblechprofil ergibt, welches als nachteilig angesehen wird.

Mit dem nachstehend beschriebenen Verfahren gelingt es, eine solche wellenförmige Verzahnung 3a mit der Verzahnung 3 so in Einklang zu bringen, dass sich die Drehzahlfestigkeit eines solchen Lamellenträgers bei Verminderung oder Beibehaltung der gleichen Wandstärke wesentlich erhöhen lässt.

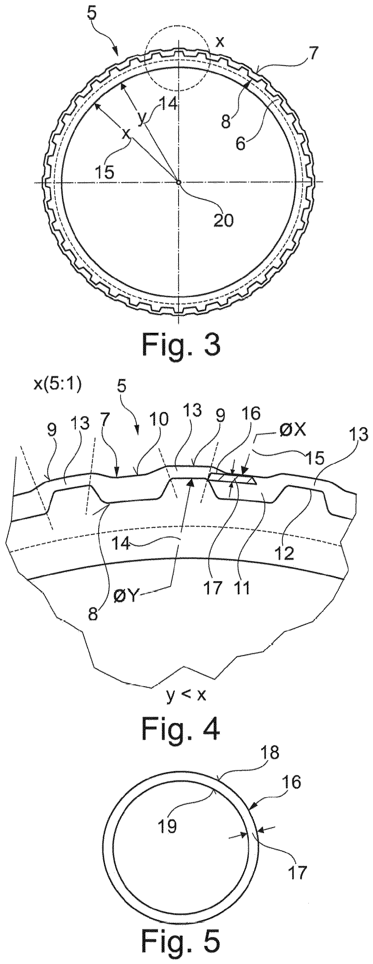

Hier zeigen die Figuren 3 bis 5 den Außenlamellenträger (Figur 3), der ausgehend von einem Drehzentrum 20 zwei verschiedene Durchmesser X und Y definiert.

Der Durchmesser X ist der Zahn-Durchmesser 15 gemäß Figur 4, der den Außendurchmesser eines axial einwärts eingeschnürten talartigen Profilbereiches 10 der Verzahnung zeigt.

Die Verzahnung des Lamellenträgers besteht nämlich aus einem Außenprofil 7 gemäß Figuren 3 und 4. Das Außenprofil 7 ist durch den talartigen, radial einwärts verschobenen Profilbereich 10 gebildet, der stetig in einen radial auswärtsgerichteten, bergartigen Profilbereich 9 übergeht.

Es handelt sich also um ein gleichmäßiges unmoduliertes Berg-Tal-Profil des Außenprofils 7, was bedeutet, dass das vorher als nachteilig angesehene modulierte Wellblechprofil entfällt.

Das Innenprofil 8 des Außenlamellenträgers 5 besteht wiederum aus einem radial einwärtsgerichteten Zahn 11, der sich stetig und wiederholt gleichmäßig am Umfang verteilt in einen im Durchmesser vergrößerten Zahnkopf 12 hinein verformt.

Zwischen beiden Profilbereichen des Außenprofils 7 und dem Innenprofil 8 ergibt sich somit ein unverformter Steg 13, der in der Art eines Stützband-Zylinders 16 die vollständige Innen- und Außenverzahnung umgreift und hieraus ein geschlossener Zylinder gebildet ist, wie dies aus Figur 5 zu entnehmen ist.

Damit ergibt sich bei dem hergestellten Bauteil zwischen dem inneren Zahnkopf-Durchmesser 14 (Parameter Y) und dem äußeren Zahn-Durchmesser 15 (Parameter X) ein unverformter Stützband-Zylinder 16, der im gezeigten Ausführungsbeispiel eine Stützbanddicke 17 aufweist.

Diese Stützbanddicke 17 im Bereich des Stützband-Zylinders 16 erhöht im entscheidenden Maß die Drehzahlfestigkeit der gesamten Verzahnung, auch bei hohen Umdrehungsgeschwindigkeiten, weil es sich um ein in sich geschlossenes Stützband handelt, welches somit die Verzahnung in radialer und in Umfangsrichtung zusammenhält und gegen auswärtsgerichtete Fliehkräfte schützt und abstützt.

In Figur 5 ist schematisiert die Stirnansicht eines solchen Stützband-Zylinders 16 dargestellt. Der Stützband-Zylinder 16 hat somit eine unverformte rotationssymmetrische Profilgebung in der Art eines Zylinders mit einem Außenumfang 18 und einem Innenumfang 19. Nachdem der Stützband-Zylinder 16 vollkommen stetig als rotationssymmetrisches Zylinderteil ausgebildet ist, erfüllt es die Forderung, die von innen nach außen gerichteten Fliehkräfte in optimaler Weise abzustützen und aufzufangen.

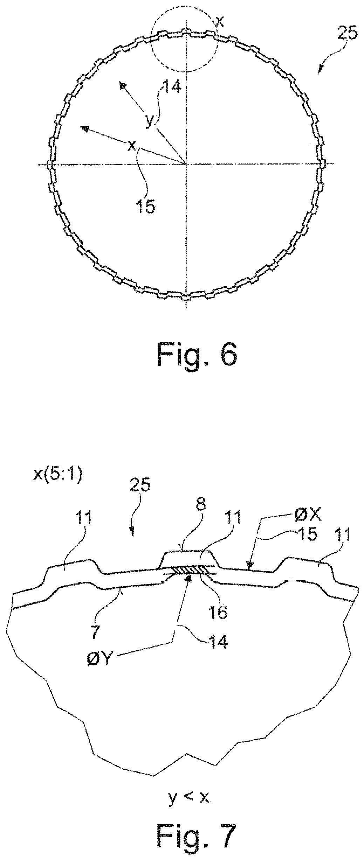

Die gleichen Verhältnisse gelten auch für einen in den Figuren 6 und 7 dargestellten Innenlamellenträger 25, der in gleicher Weise wie der Außenlamellenträger 5 nach den Figuren 3 bis 5 ausgebildet ist.

Auch hier ergibt sich ein unverformter Stützband-Zylinder als rotationssymmetrisches Zylinderteil, welches sich über die gesamte axiale Länge des Innenlamellenträgers 25 erstreckt und somit die während der Rotation entstehenden Fliehkräfte aufnimmt.

Das vorher als nachteilig angesehene modulierte Wellblechprofil entfällt somit sowohl für einen Innenlamellenträger als auch für einen Außenlamellenträger.

Ein so hergestelltes Bauteil eines Lamellenträgers ist deshalb in der Lage, bei gleicher oder verminderter Wandstärke - verglichen mit gleichwertigen Bauteilen des Standes der Technik - wesentlich höhere Drehzahlen aufzunehmen als vergleichsweise die Lamellenträger nach dem Stand der Technik, zum Beispiel nach den Figuren 1 und 2.

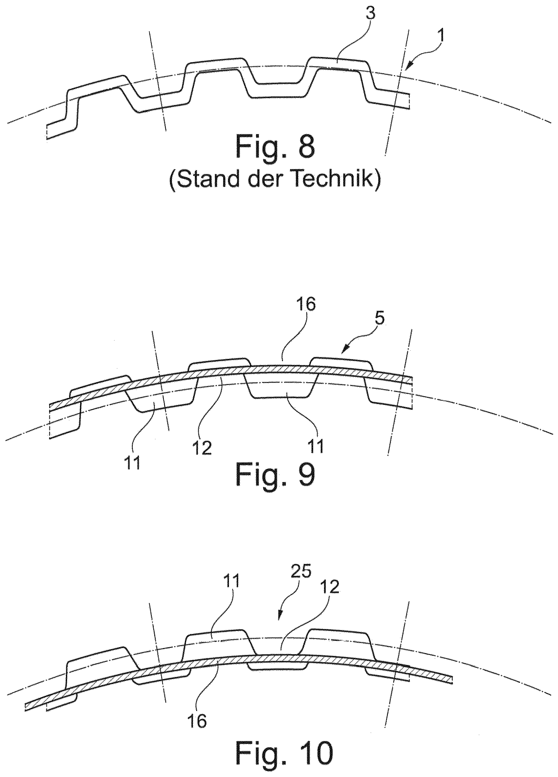

Die Figuren 8 bis 10 zeigen die Gegenüberstellung der verschiedenen Zahnformen, wobei in Figur 8 die herkömmliche Verzahnung 3 eines herkömmlichen Lamellenträgers 1 dargestellt ist, während im Unterschied hierzu die Figur 9 zeigt, dass ein durchgehender rotationssymmetrischer Zylinderbereich zwischen den beiden Innen- und Außenverzahnungen gebildet wird, der als Stützband-Zylinder 16 dargestellt ist.

Die gleichen Verhältnisse ergeben sich bei Figur 10 bei dem Innenlamellenträger 15, dessen Stützband-Zylinder 16 radial einwärts im Vergleich zu dem Außenlamellenträger versetzt ist.

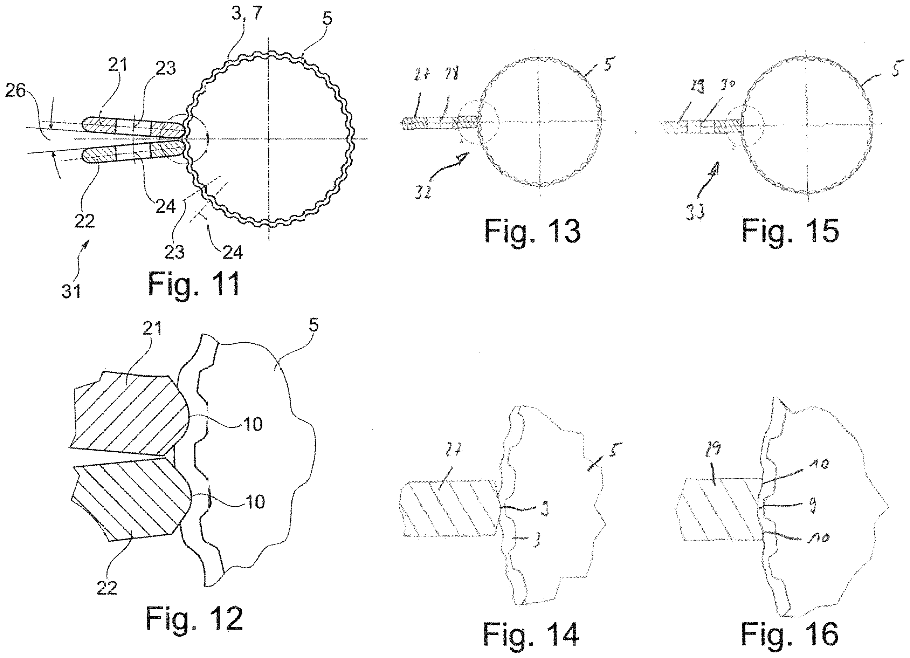

In den Figuren 11 bis 18 werden nun bevorzugte Werkzeuge dargestellt, die geeignet sind, eine solche Verzahnung herzustellen.

Zunächst zeigt die Figur 11 als Beispiel die Verzahnung eines Außenlamellenträgers 5, wobei drei verschiedene Profilrollensätze verwendet werden, nämlich der Profilrollensatz 31 für die Herstellung des talartigen Profilbereichs 10 (siehe Figur 12), der Profilrollensatz 32 für die Herstellung des bergartigen Profilbereichs 9 im Bereich der Außenverzahnung, und der Profilrollensatz 33 für die Feinbearbeitung (Kalibrierung) von Berg- und Tal-Profilbereichen 9, 10 gemäß Figuren 15 und 16.

Es versteht sich von selbst, dass bei der jeweiligen Bearbeitung des Außenprofils 7 gemäß den Figuren 11 bis 16 ein nicht näher dargestellter, ein gleiches Profil aufweisender Gegenhalter im Innenraum des Außenlamellenträgers 5 angeordnet ist, in dessen Profil das Profil des Bauteils hinein verformt wird.

Gleiches gilt im Übrigen auch für die Herstellung des Innenlamellenträgers 25 in analoger Weise.

Zunächst wird der Profilrollensatz 31 beschrieben, der gemäß Figur 11 aus zwei im Anstellwinkel 26 geneigt gegeneinander angestellten Profilrollen 21, 22 besteht, die ein Rollenpaar bilden, wobei jede Profilrolle 21 eine Drehachse 23 und 24 aufweist.

Es wird später noch erläutert werden, dass die hier genannten Profilrollen in einer Kassette aufgenommen sind, und eine Vielzahl von Kassetten gleichmäßig am Umfang verteilt angeordnet sind, sodass ein vollständiger Bearbeitungssatz aus einer Vielzahl von Profilrollen 21, 22 besteht, die sich gleichmäßig verteilt am Umfang des Außenprofils 7 des Außenlamellenträgers 5 anlegen.

Durch die Anordnung von Profilrollen in am Innenumfang eines Tragwerkzeugs angeordneten Kassetten ergibt sich der Vorteil, dass jede Kassette eine dem jeweiligen Nutzahn des Lamellenträgers angepassten Profilrollensatz aufnehmen kann und somit jedem Nutzahn des Lamellenträgers ein individueller Profilrollensatz zugeordnet werden kann.

Die Profilrollen können in der jeweiligen Kassette entweder auf einer Lagerachse drehbar angeordnet sein. Sie können aber auch achslos in der Kassette aufgenommen sein.

Mit den gegeneinander im Anstellwinkel 26 gestellten Profilrollen 21, 22 werden gemäß Figur 12 die talartigen Profilbereiche 10 ausgewalzt.

Nach Figuren 13 und 14 wird eine weitere Profilrolle 27 verwendet, die gemäß Figur 14 zum Auswalzen der kleiner profilierten Profilbereiche 9 (Bergbereiche) geeignet ist.

Auch diese Art von Profilrollen 27 ist jeweils in einer Kassette aufgenommen, und alle Kassetten sind gleichmäßig verteilt am Umfang angeordnet und bilden so ein Rollumformwerkzeug, wie es beispielsweise Gegenstand der eigenen DE 10 2010 053 547 A1 ist.

Auch hier ist die jeweilige Profilrolle 27 im Bereich einer Drehachse 28 in einer nicht näher dargestellten Kassette gehalten.

Gleiches gilt für die Figuren 15 und 16, wo eine Profilrolle 29 für die Feinbearbeitung der bergartigen Profilbereiche 9 und der talartigen Profilbereiche 10 vorgesehen ist. Diese ist so profiliert, dass sowohl mit entsprechenden Profilformen der talartigen Profilbereiche 10 als auch der bergartigen Profilbereiche 9 gegenüber einem nicht näher dargestellten, am Innenumfang sich formschlüssig anliegenden Profildorn ausgewalzt wird.

Es bedarf keiner näheren Erläuterungen, dass in der gleichen Weise auch ein Innenlamellenträger 25 hergestellt wird.

Wie in dem hier dargestellten Profilrollensatz wird auch bei dem Innenlamellenträger 25 der radial äußere Bereich hergestellt, der in Figur 7 als Innenprofil 8 bezeichnet ist.

In Bezug auf das mit dem "Außenprofil 7" in Figur 7 bezeichnete Profil handelt es sich demnach um einen Gegenprofilhalter, der gegenüber den sich am Außenumfang radial einwärtsgerichteten Profilrollensätzen abstützt.

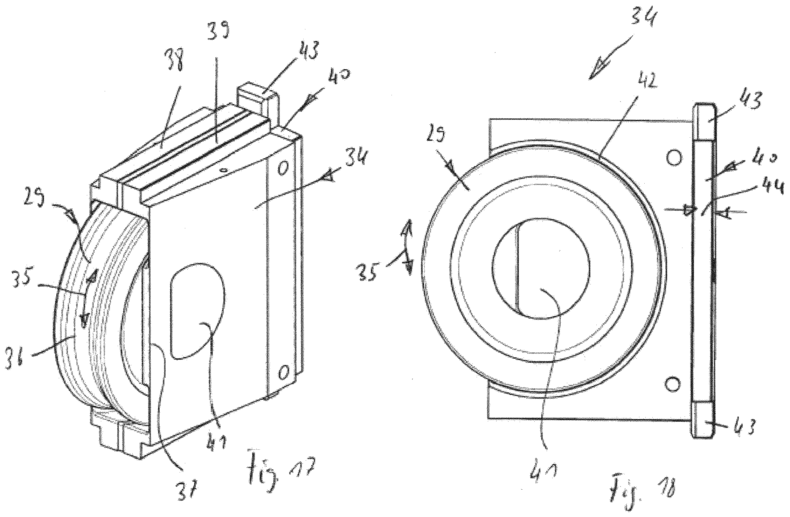

Die Figuren 17 und 18 zeigen deshalb ein geeignetes Umformwerkzeug, welches im gezeigten Ausführungsbeispiel aus zwei spiegelsymmetrisch zueinander angeordneten Kassettenhälften 38, 39 besteht, zwischen denen jeweils die Profilrolle 29, 31, 32, 33 aufgenommen ist.

Es wird nur als Beispiel eine Profilrolle 29 dargestellt, wobei die anderen Profilrollen gemäß den Zeichnungen in den Figuren 11, 13 und 15 in gleicher Weise - wie dargestellt - von der jeweiligen Kassette aufgenommen sind.

Die dort aufgenommene Profilrolle 29 ist in den Drehrichtungen 35 drehbar gelagert und ist hierbei auf einem Lagerbolzen 41 angeordnet, der in einer zugeordneten Aufnahme in der Kassette drehbar gelagert ist.

Es bildet sich somit in der Kassette ein Umfangsraum 42 als Freiraum, sodass die dort aufgenommene Profilrolle frei drehbar ist.

Selbstverständlich ist die Erfindung nicht auf eine über einen Lagerbolzen 41 drehbar gelagerte Profilrolle 29, 31, 32, 33 beschränkt.

Der jeweilige Profilbereich 36 entspricht dem Profilbereich, wie er anhand der Profilrollen 29, 31, 32, 33 beschrieben wurde.

Die jeweilige Profilrolle ragt deshalb mit einem Teil ihres Außenumfangs aus einem Ausschnitt 37 der Kassette 34 heraus.

An der Rückwand der Kassette 34 ist eine Einstellplatte 40 angeordnet, die im Wesentlichen aus einem Steckansatz 43 besteht, der über die lichte Höhe der Kassette hinausragt und mit dem die Kassette in einer nicht näher dargestellten Aufnahme aufgenommen wird.

Wichtig ist, dass die sich an den Steckansatz 43 innen anschließende Einstellplatte 40 auswechselbar gehalten ist, und in ihrer Einstellstärke 44 einstellbar ist.

Auf diese Weise kann durch Auswechslung einer Einstellplatte 40 mit unterschiedlicher Einstellstärke die Profiltiefe einer Verzahnung bestimmt werden.

Je größer die Einstellstärke 44 der Einstellplatte 40 ist, desto tiefer wird die Verzahnung von den sich am Außenumfang eines Lamellenträgers abstützenden Profilrollen.

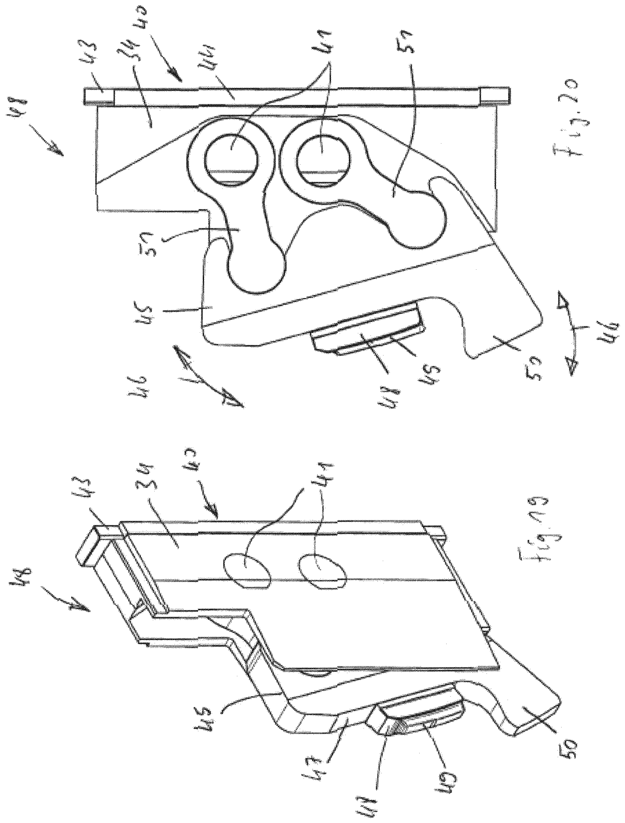

Die Figuren 19 und 20 zeigen, dass die Erfindung nicht auf ein Rollumformwerkzeug beschränkt ist. In einer anderen Ausgestaltung kann es auch vorgesehen sein, dass statt eines Rollumformwerkzeuges ein Drückwerkzeug verwendet wird, das als Drückwerkzeug 48 in den Figuren 19 und 20 dargestellt ist.

Für dieses Drückwerkzeug gelten die gleichen Erläuterungen bezüglich der Herstellung eines Außenoder Innenlamellenträgers 5, 25 wie für den vorher dargestellten Profilrollensatz.

Anstatt einer rollenden Profilumformung erfolgt hierbei die Verwendung eines Drückwerkzeuges, wobei bei einem Formstückträger 45 an dessen Frontseite 47 ein Drückwerkzeug 48 angeordnet ist, dessen vorderer Teil durch ein Profilelement 49 ausgebildet ist, welches Profilelement 49 der Profilform einer der vorher beschriebenen Profilrollen entspricht.

Auf diese Weise kann jede Profilrolle durch ein entsprechendes Drückwerkzeug 48 ersetzt werden.

Der Formstückträger 45 trägt an seiner unteren Seite eine radial einwärtsgerichtete Mitnehmernase 50, die eine Aufwärtsbewegung pro Hub auslöst. Der gesamte Formstückträger wird in den Pfeilrichtungen 46 pendelnd hin- und herbewegt. Hierzu werden Pleuel 51 verwendet, die in zugeordneten Lagerbolzen 41 im Bereich der Kassette 34 drehbar aufgenommen sind.

Das andere Ende der Pleuel 51 greift hierbei in zugeordnete, einseitig offene Lagerschalen am Formstückträger 45 ein, sodass dieser eine Pendelbewegung in den Pfeilrichtungen 46 hin- und hergehend ausführt, und demzufolge ebenfalls eine Profilierung an einem Außenlamellenträger 5 oder einem Innenlamellenträger 25 jeweils im Außenbereich anbringt.

Auch hier liegt dem Drückwerkzeug 48 ein nicht näher dargestelltes Gegenwerkzeug gegenüber, welches als Profildorn ausgebildet ist.

Der Lamellenträger 1, 5, 25 besteht bevorzugt aus einem Blechteil in Feinkorngüte mit einer geeigneten Dehnungsfähigkeit zur Roll- und/oder Drückumformung. Die hierfür geeigneten Materialstärken wurden eingangs bereits erwähnt.

Ein geeigneter Werkzeugsatz zur Rollumformung sieht vor, dass die jeweils die Rollumformwerkzeuge aufnehmenden Kassetten in axialer Richtung des Lamellenträgers 1, 5, 25 hintereinander liegend in einer Bearbeitungsmaschine angeordnet sind, sodass der umzuformende Lamellenträger zunächst im Bereich der ersten Kassette seine Umformung für den ersten Profilbereich erhält. Nach Verlassen der ersten Kassette gelangt er in axialer Richtung in den Arbeitsbereich der sich in Förderrichtung des Lamellenträgers axial anschliessenden zweiten Kassette, wo er seine Umformung für den zweiten Profilbereich erhält. Nach Verlassen dieser zweiten Kassette gelangt er in axialer Richtung in den Arbeitsbereich in der sich in Förderrichtung des Lamellenträgers anschliessenden dritten Kassette, wo er seine Kalibrierung erhält.

Es kann in einer Weiterbildung vorgesehen sein, dass die Rollumformwerkzeuge für die Rollumformung in der zweiten und dritten Kassette in einer einzigen Kassette zusammen gefasst sind. Damit findet die Kalibrierung während der Rollumformung in der zweiten Kassette statt. Die dritte Kassette entfällt dann.

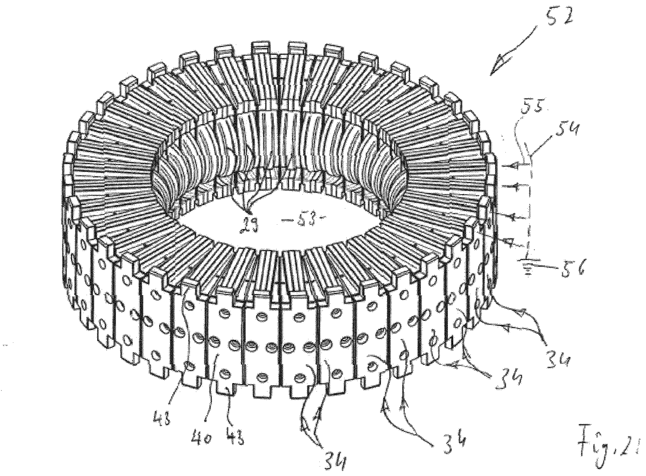

Das Ausführungsbeispiel nach Figur 21 zeigt ein Rollwerkzeug 52, das durch eine Vielzahl von gleichmässig am Außenumfang angeordneter Kassetten 34 gebildet ist und jede Kassette 34 ein oder mehrere Profilrollen 21, 22, 27, 29 aufnimmt. Die Kassette 34 kann entweder nach Fig. 17-18 oder nach Fig. 19-20 ausgebildet sein.

Demnach ist das Rollwerkzeug 52 durch eine Vielzahl von gleichmässig am Umfang angeordneter Kassetten 34 gebildet, wobei die Kassetten 34 mit ihren radial einwärts gerichteten Profilrollen 21, 22, 27, 29 eine zentrale Aufnahmeöffnung 53 für die Einführung eines umzuformenden Werkstücks bilden und wobei die radial einwärts gerichtete Abstand 55 mindestens eines Teils der Profilrollen 21, 27, 29 einstellbar ausgebildet ist.

Mindestens ein Teil der insgesamt vorhandenen Einstellplatten 43 der Kassetten 34 stützt sich mit einem einstellbaren radialen Abstand 55 an einem ortsfesten Maschinengehäuse 56 ab. Somit können ein Teil der Kassetten 34 einstellbar ausgebildet sein oder alle zusammen.

**Zeichnungs legende**

| | |
|---|---|
| 1 | Lamellenträger |
| 2 | Deckel |
| 3 | Verzahnung 3a Verzahnung |
| 4 | Wandung |
| 5 | Außenlamellenträger |
| 6 | Innenverzahnung |
| 7 | Außenprofil |
| 8 | Innenprofil |
| 9 | Profilbereich (Berg) |
| 10 | Profilbereich (Tal) |
| 11 | Zahn |
| 12 | Zahnkopf |
| 13 | Steg |
| 14 | Zahnkopf-Durchmesser Y (von 12) |
| 15 | Zahn-Durchmesser X (von 11) |
| 16 | Stützband-Zylinder |
| 17 | Stützband-Dicke |
| 18 | Außenumfang (von 16) |
| 19 | Innenumfang (von 16) |
| 20 | Drehzentrum |
| 21 | Profilrolle (21 + 22 = Rollenpaar für 16) |
| 22 | Profilrolle (21 + 22 = Rollenpaar für 16) |
| 23 | Drehachse (von 21) |
| 24 | Drehachse (von 22) |
| 25 | Innenlamellenträger |
| 26 | Anstellwinkel |
| 27 | Profilrolle (für 9) |
| 28 | Drehachse |
| 29 | Profilrolle (für 9 + 10) |
| 30 | Drehachse |
| 31 | Rollensatz (für 21 + 22) |
| 32 | Rollensatz (für 27) |
| 33 | Rollensatz (für 29) |
| 34 | Kassette |
| 35 | Drehrichtung |
| 36 | Profilbereich |
| 37 | Ausschnitt |
| 38 | Kassettenhälfte |
| 39 | Kassettenhälfte |
| 40 | Einstellplatte |
| 41 | Lagerbolzen |
| 42 | Umfangsraum |
| 43 | Steckansatz |
| 44 | Einstellstärke |

| | |
|---|---|
| 45 | Formstückträger |
| 46 | Pfeilrichtung |
| 47 | Frontseite |
| 48 | Drückwerkzeug |
| 49 | Profilelement |
| 50 | Mitnehmernase |
| 51 | Pleuel |
| 52 | Rollwerkzeug |
| 53 | Aufnahmeöffnung |
| 54 | Gegenhalter |
| 55 | radialer Abstand |
| 56 | Maschinengehäuse |

**Patentansprüche**

1. Kassette (34) geeignet zur Aufnahme eines Profilrollensatzes oder Drückumformsatzes zum Rollen oder Drückumformen von Lamellenträgern (1, 5, 25) oder dergleichen, die als innen- und außenverzahntes, topfförmiges Blechteil ausgebildet sind, wobei im Innenraum der Kassette Profilrollen (21, 22; 27, 29) oder ein Drückwerkzeug (48) angeordnet sind, die dazu geeignet sind, sich mit ihrem Außenumfang am umzuformenden Lamellenträger (1, 5, 25) abzuwälzen und dergestalt eine Verzahnung (3, 3a, 6) am umzuformenden Lamellenträger (1, 5, 25) einzubringen wobei die Verformungstiefe der Verzahnung im Lamellenträger (1, 5, 25) einstellbar ist, **dadurch gekennzeichnet, dass** an der Rückwand der Kassette (34) eine auswechselbare Einstellplatte (40) angeordnet ist, deren Dicke die Verformungstiefe der Verzahnung im Lamellenträger bestimmt.

2. Umformwerkzeug (52) mit einer Vielzahl von gleichmässig am Umfang angeordneter Kassetten (34) nach Anspruch 1, **dadurch gekennzeichnet, dass** die Kassetten (34) mit ihren radial einwärts gerichteten Profilrollen (21, 22, 27, 29) oder Drückwerkzeugen (48) eine zentrale Aufnahmeöffnung (53) für die Einführung eines umzuformenden Werkstücks bilden, und dass der radial einwärts gerichtete Abstand mindestens eines Teils der Profilrollen (21, 27, 29) oder Drückwerkzeuge (48) einstellbar ausgebildet ist.

3. Umformwerkzeug nach Anspruch 2, **dadurch gekennzeichnet, dass** sich mindestens ein Teil der insgesamt vorhandenen Einstellplatten (40) der Kassetten (34) mit einem einstellbaren radialen Abstand (55) an einem ortsfesten Maschinengehäuse (56) abstützen.

4. Umformwerkzeug nach einem der Ansprüche 2 oder 3, **dadurch gekennzeichnet, dass** der radiale Abstand (55) zwischen den Kassetten (34) und einem die Kassetten umgebenden Maschinengehäuse (56) einstellbar ist.

## Claims

1. Cassette (34) suitable for receiving a profile roller set or pressure shaping set for rolling or pressure shaping of disc carriers (1, 5, 25) or the like which are designed as a pot-like sheet metal part having inner and outer teeth, wherein profile rollers (21, 22; 27, 29) or a pressure tool (48), which are suitable to be rolled with their outer periphery on the disc carrier (1, 5, 25) to be shaped and in such a way to introduce toothing (3, 3a, 6) on the disc carrier (1, 5, 25) to be shaped, are arranged in the interior of the cassette, wherein the deformation depth of the toothing in the disc carrier (1, 5, 25) is adjustable, **characterised in that** a replaceable adjusting plate (40), the thickness of which determines the deformation depth of the toothing in the disc carrier, is arranged on the rear wall of the cassette (34).

2. Shaping tool (52) having a plurality of cassettes (34) according to claim 1, arranged uniformly on the periphery, **characterised in that** the cassettes (34) with their radially inwardly directed profile rollers (21, 22, 27, 29) or pressure tools (48) form a central receiving opening (53) for the introduction of a workpiece to be shaped, and **in that** the radially inwardly directed distance of at least some of the profile rollers (21, 27, 29) or pressure tools (48) is designed to be adjustable.

3. Shaping tool according to claim 2, **characterised in that** at least some of the total existing adjusting plates (40) of the cassettes (34) are supported on a fixed machine housing (56) with an adjustable radial distance (55).

4. Shaping tool according to one of claims 2 or 3, **characterised in that** the radial distance (55) between the cassettes (34) and a machine housing (56) surrounding the cassettes is adjustable.

## Revendications

1. Cassette (34) apte à recevoir un jeu de rouleaux profilés ou un jeu de déformation par compression destiné au roulage ou à la déformation par compression de supports de lamelles (1, 5, 25) ou d'éléments similaires qui sont conçus comme une pièce en tôle en forme de godet à dentures intérieure et extérieure, dans laquelle des rouleaux profilés (21, 22 ; 27, 29) ou un outil de compression (48) qui sont aptes à rouler avec leur circonférence extérieure sur le support de lamelle à déformer (1, 5, 25) et à réaliser ainsi une denture (3, 3a, 6) sur le support de lamelle à déformer (1, 5, 25) sont disposés à l'intérieur de la cassette, et dans laquelle la profondeur de déformation de la denture dans le support de lamelle (1, 5, 25) est réglable, **caractérisée en ce qu'**il est prévu sur la paroi arrière de la cassette (34) une plaque de réglage échangeable (40) dont l'épaisseur définit la profondeur de déformation de la denture dans le support de lamelle.

2. Outil de déformation (52) avec un grand nombre de cassettes (34) selon la revendication 1 disposées régulièrement sur la circonférence, **caractérisé en ce que** les cassettes (34) forment avec leurs rouleaux profilés (21, 22, 27, 29) ou leurs outils de compression (48) dirigés radialement vers l'intérieur une ouverture de réception centrale (53) pour l'introduction d'une pièce à déformer, et **en ce que** l'écartement, dirigé radialement vers l'intérieur, d'une partie au moins des rouleaux profilés (21, 27, 29) ou des outils de compression (48) est conçu pour être réglable.

3. Outil de déformation selon la revendication 2, **caractérisé en ce qu'**une partie au moins de la totalité des plaques de réglage (40) des cassettes (34) existantes s'appuient sur un carter de machine (56) fixe avec un écartement radial (55) réglable.

4. Outil de déformation selon l'une des revendications 2 ou 3, **caractérisé en ce que** l'écartement radial (55) entre les cassettes (34) et un carter de machine (56) entourant les cassettes est réglable.

Fig. 1
(Stand der Technik)

Fig. 2
(Stand der Technik)

5

x

7

14

8

6

y

x

15

20

## Fig. 3

x(5:1)

5

9   13   7   10   13   9   16   ØX

13

15

14

12

ØY

8   17   11

y < x

## Fig. 4

18

16

19

17

## Fig. 5

Fig. 6

x(5:1)

y < x

Fig. 7

## Fig. 8
### (Stand der Technik)

## Fig. 9

## Fig. 10

Fig. 15

Fig. 16

Fig. 13

Fig. 14

Fig. 11

Fig. 12

Fig. 10

Fig. 11

Fig. 20

Fig. 19

Fig. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010053547 A1
- DE 102013006216 A1
- DE 102013006150 A1
- DE 102013216747 A1
- DE 102014211633 A1
- DE 102012213119 B3
- DE 102008017608 B3
- DE 102006007501 A1
- DE 102006025034 A1